# EUROPÄISCHE PATENTANMELDUNG

(11) **EP 2 666 556 A1**
(43) Veröffentlichungstag der Anmeldung: **27.11.2013**
(21) Anmeldenummer: 13002719.6
(22) Anmeldetag: 24.05.2013
(51) Int. Cl.: B08B 15/02, B23Q 11/00

(54) **Vorrichtung zum Auffangen von Zerspanungsabfällen an Handwerkzeugmaschinen**

(30) Priorität: 25.05.2012 DE 202012005690 U; 19.12.2012 DE 202012012135 U
(71) Anmelder: Boos Fliesenbau GmbH, 79353 Bahlingen am Kaiserstuhl (DE)
(72) Erfinder: Boos, Edgar, 79353 Bahlingen (DE)
(74) Vertreter: Huwer, Andreas

(57) **Zusammenfassung**

Eine Vorrichtung zum Auffangen von Zerspanungsabfällen an Handwerkzeugmaschinen hat eine tragbare Kammer (1), die eine Innenhöhlung (2) aufweist, die derart dimensioniert ist, dass sie die Handwerkzeugmaschine und ein damit zu bearbeitenden Werkstück aufnehmen kann. Die Kammer (1) weist folgendes auf.
- eine verschließbare Kammeröffnung (9), durch welche die Handwerkzeugmaschine in die Innenhöhlung (2) einbringbar und aus dieser entnehmbar ist,
- mindestens eine durchsichtige Kammerwand, durch welche die Innenhöhlung (2) beobachtbar ist,
- mindestens eine an den Querschnitt eines menschlichen Arms angepasste Durchtrittsöffnung (12), durch die der Benutzer mit der Hand und/oder dem Arm in die Innenhöhlung (2) der Kammer (1) eingreifen kann,
- mindestens eine mit der Innenhöhlung (2) verbundene Absaugöffnung (13), an der eine Staubabsaugeinrichtung angeschlossen oder anschließbar ist. (Fig. 1)

## Beschreibung

Die Erfindung betrifft eine Vorrichtung zum Auffangen von Zerspanungsabfällen an Handwerkzeugmaschinen.

Beim Verlegen von Wand- oder Bodenlosen in Altbauwohnungen kommt es regelmäßig vor, dass in Fliesen, die am Rand einer zu fliesenden Wand- oder Bodenfläche verlegt werden sollen, mittels eines Winkelschleihrs Aussparungen eingebracht werden müssen, um die Maße der Fliesen an die mit den Fliesen zu belegende Wand- oder Bodenfläche anzupassen. Im Bereich von Wasseranschlüssen und/oder Anschlüssan von Abflussrohren, kann es außerdem erforderlich werden, mit Hilfe einer Bohrkrone Durchtrittslochungen für Rohrleitungen in die Fliesen einzubringen. Die Bearbeitung der Fliesen mit derartigen Schleifwerkzeugen ist jedoch mit einer erheblichen Staubentwicklung verbunden. Wenn die Renovierungsarbeiten in Wohnungen durchgeführt werden, die bewohnt sind, werden die Schleifarbeiten in der Regel außerhalb der Wohnung durchgeführt, beispielsweise vor dem Haus auf der Straße. Für die mit den Renovierungsarbeiten beauftragten Handwerker ist dies mit einem nicht unerheblichen Zeitaufwand verbunden, weil sie für jede zu bearbeitende Fliese zwischen der Wohnung und der Straße hin- und horlaufen müssen.

Es sind zwar auch bereits Handwerkzeugmaschinen bekannt, die ein elektrisch angetriebenes Bohr-, Fräs- oder Schleifwerkzeug aufweisen, das hinter einer Schutzabdeckung angeordnet ist, die fest mit dem Maschinengehäuse der Handwerkzeugmaschine verbundene ist. Dabei ist an der Schutzabdeckung eine Absaugöffhung vorgesehen, die mit einer Absaugeinrichtung, wie zum Beispiel einem Stabsauger verbindbar ist. Durch eine derartige Vorrichtung kann zwar während des Bohr-, Fräs- oder Schleifvorgangs die Staubemission an der Handwerkzeugmaschine reduziert werden, jedoch wird durch die mit dem Maschinengehäuse verbundene Schutzabdeckung und die daran angeschlossene Absaugeinrichtung die Handhabung der Handwerkzeugmaschine erschwert

Es besteht deshalb die Aufgabe, eine Vorrichtung der eingangs genannten Art zu schaffen, mit der die bei der Benutzung von Handwerkzeugmaschinen, wie handgeführten Bohr-, Fräs- oder Schleifmaschinen, auftretenden Zerspanungsabfällo auf einfache Weise aufgefangen werden können. Dabei soll die Vorrichtung eine komfortable Handhabung der Handwerkzeugmaschine ermöglichen.

Erfindungsgemäß wird diese Aufgabe durch eine Vorrichtung gelöst, welche eine tragbare Kammer mit einer Innenhöhlung aufweist, die derart dimensioniert ist, dass sie die Handwerkzeugmaschine und ein damit zu bearbeitenden Werkstück aufnehmen kann, wobei die Kammer folgendes aufweist:
- eine verschließbare Kammeröffhung, durch welche die Handwerkzeugmaschine und ggf das Werkstück in die Innenhöhlung einbringbar und aus dieser entnehmbar sind,
- mindestens eine durchsichtige Kammerwand, durch welche die Innenhöhlung beobachtbar ist,
- mindestens eine an den Querschnitt eines menschlichen Arms angepasste Durchtrittsöffnung, durch die der Benutzer mit der Hand und/oder dem Arm in die Innenhöhlung der Kammer eingreifen kann,
- mindestens eine mit der Innenhöhlung verbundene Absaugöffnung, an der eine Staubabsaugeinrichtung angeschlossen oder anschließbar ist.

In vorteilhafter Weise ermöglicht es die Vorrichtung, Bohr-, Fräs- oder Schleifarbeiten mit einer entsprechenden Handwerkzeugmaschine in der im Wesentlichen geschlossenen Innenhöhlung der Kammer durchzuführen, wobei der außerhalb der Kammer befindliche Benutzer während des Bearbeitens des Werkstücks mit der Hand oder dem Arm durch die Durchtrittsöffnung hindurch in die Innenhöhlung eingreifen kann, um die Handwerkzeugmaschine zu führen und relativ zu dem Werkstück zu positionieren. Dabei kann der Benutzer der Vorrichtung die Handwerkzeugmaschine und das Werkstück durch die durchsichtige Kammerwand hindurch beobachten. Die während des Bearbeitens auftretenden Zerspanungsabfälle, wie Schleifstaub, Späne und dergleichen, verbleiben im Wesentlichen in der Kammer oder werden von der Staubabsaugeinrichtung angesaugt und in an sich bekannter Weise in einem Staubbeutel oder einem Staubbehälter aufgefangen. Durch die erfindungsgemäße Vorrichtung wird also bei der Verwendung von Handwerkzeugmaschinen, die motorisch angetriebene Schleif, Bohr- oder Fräswerkzeuge aufweisen, eine Verschmutzung der Umgebung im Wesentlichen vermieden. Die Vorrichtung verbessert auch die Arbeitssicherheit da die Gefahr, dass der Benutzer und/oder andere in der Umgebung der Handwerkzeugmaschine befindliche Personen durch von der Bearbeitungsstelle weg geschleuderte Partikel, wie z.B. Splitter, geschädigt werden und/oder Schleifstaub einatmet, reduziert wird. Außerdem kann durch die Vorrichtung die beim Betrieb der Handwerkzeugmaschine auftretende Lärmbelastung erheblich reduziert werden.

Bei einer vorteilhaften Ausgestaltung der Erfindung ist die durchsichtige Kammerwand an der Oberseite der Kammer angeordnet und vorzugsweise als Klappe ausgestaltet, die mit einem die Kammeröffnung umgrenzenden Randbereich der Kammer zwischen einer Offen- und einer Schließstellung verschwenkbar verbunden ist. Die Innenhöhlung der Kammer kann dann bei geschlossener Klappe bequem durch die Klappe hindurch beobachtet werden. Bei geöffneter Klappe ist die Innenseite der Klappe gut zugänglich, so dass diese bei Bedarf auf einfache Weise von Schleifstaub oder dergleichen Verschmutzungen gereinigt werden kann. Gegebenenfalls ist es sogar möglich, dass die Klappe lösbar mit dem die Kammeröffnung umgrenzenden Randbereich der Kammer verbindbar ist. Die Klappe kann dann demontiert und separat gereinigt werden, beispielsweise unter einem Wasserstrahl.

Bei einer bevorzugten Ausführungsform der Erfindung ist an der Durchtrittsöffnung eine elastische Dichtung angeordnet, die derart ausgestaltet ist, das sie am Arm des Benutzers zur Anlage kommt, wenn der Benutzer durch die Durchtrittsöffnung hindurch mit dem Arm in die Innenhöhlung eingreift. Dadurch kann während der Benutzung der Handwerkzeugmaschine das Austreten von Staub aus der Kammer noch wirkungsvoller vermieden werden.

Bei einer zweckmäßigen Ausgestaltung der Erfindung weist die Dichtung mehrere, in der Durchtrittsöffnung angeordnete und/oder diese bereichsweise überdeckende flächige Dichtungsabschnitte auf, die quer zu einer Normalen auf die von der der Durchtrittsöffnung aufgespannte Ebene zueinander versetzt sind und in Richtung der Normalen aus einer Ruhelage auslenkbar sind. Die Dichtung kann sich dann leicht an unterschiedliche Benutzer anpassen und ermöglicht außerdem, dass der Benutzer seinen Arm relativ zur Kammer bewegen kann, wenn er mit dem Arm durch die Durchtrittsöffnung hindurch in die Innenhöhlung der Kammer eingreift, ohne dass die Gefahr besteht, dass bei Benutzung der Handwerkzeugmaschine größere Mengen Staub aus der Kammer austreten..

Vorteilhaft ist, wenn die Vorrichtung mindestens einen Tragegriff aufweist. Die Vorrichtung kann dann auf einfache Weise zu unterschiedlichen Einsatzorten bzw. transportiert werden.

Der Tragegriff ist bevorzugt durch einen schlitzförmigen Durchbruch in einer Wandung der Kammer gebildet, wobei der Durchbruch mittels einer Dichtungsscheibe abgedichtet ist, die quer zu der von dem Durchbruch aufgespannten Ebene aus einer Ruhelage in die Innenhöhlung auslenkbar ist. Die Dichtung liegt dann in der Ruhelage dicht an dem den Durchbruch umgrenzenden Wandungsbereich der Kammer an und kann in die Innenhöhlung ausgelenkt werden, wenn der Benutzer beim Tragen der Vorrichtung mit den Fingern in den schlitzförmigen Durchbruch eingreift. Außerdem kann die Dichtungsscheibe auch durch einen Unterdruck in der Innenhöhlung aus ihrer Ruhelage ausgelenkt werden, damit beim Absaugen von Luft an der Absaugöffnung durch den Durchbruch hindurch Frischluft aus der Umgebung in die Innenhöhlung der Kammer nachströmen kann.

Bei einer vorteilhaften Ausgestaltung der Erfindung weist die Kammer Wandungen auf, die durch Sandwich-Platten gebildet sind. Die Sandwich-Platten können einen leichten Plattenkern aufweisen, der beidseits mit einer Deckschicht aus einem Werkstoff beschichtet ist, der eine höhere Zugfestigkeit aufweist als der Plattenkern. Dadurch ergibt sich eine mechanische stabile, aber dennoch sehr leichte, tragbare Kammer, die außerdem die beim Betrieb der Handwerkzeugmaschine auftretenden Geräusche wirkungsvoll dämmt Der Plattenkern kann beispielsweise aus einem geschäumten Werkstoff bestehen, vorzugsweise aus einem Hartschaum. Der Plattenkern kann Kanäle aufweisen, welche den Plattenkern normal zu seiner Erstreckungsebene durchsetzen. Die Kanäle können durch eine Wabenstruktur gebildet sein. Die Deckschicht kann aus Metall, vorzugsweise aus Aluminium oder aus Kunststoff bestehen und mit dem Plattenkern stoffschlüssig verbunden sein, insbesondere über eine Klebstoffschicht.

Bei einer bevorzugten Ausführungsform der Erfindung weist die Vorrichtung ein am Erdboden aufstellbares Traggestell auf, auf dem die Kammer derart angeordnet ist, dass das Zentrum der mindestens einen Durchtrittsöffnung in einer Arbeitshöhe von 80 bis 120 cm, bevorzugt von 90 bis 1 00 cm über dem Erdboden angeordnet ist. Die Durchtrittsöffnung ist dann in einer ergonomischen Arbeitshöhe angeordnet, so dass der Benutzer der Vorrichtung die in der Innenhöhlung befindliche Handwerkzeugmaschine bequem durch die Durchtrütsöffnung hindurch ergreifen und relativ zu dem Werkstück positionieren kann.

Bei einer vorteilhaften Ausgestaltung der Erfindung weist die Kammer mindestens eine erste Kammerwand mit einem ersten Durchtrittsschlitz für eine Fliese auf, an dem wenigstens ein erstes Dichtungselement angeordnet ist, das durch das Einbringen der Fliese in den ersten Durchtrittsschlitz aus einer Schließstellung, in der es den ersten Durchtrittsschlitz überdeckt, in eine Offenstellung auslenkbar ist, in der es den ersten Durchtrittsschlitz zumindest bereichsweise freigibt. Dadurch kann eine Fliese auf einfache Weise ohne die Klappe der Kammer öffnen zu müssen, durch den Durchtrittsschlitz hindurch in die Innenhöhlung der Kammer eingebracht und/oder aus dieser entnommen werden. In der Ebene der Kammerwand ist die Länge des ersten Durchtrittsschlüzes bevorzugt größer als das Zehnfache, insbesondere das Zwanzigfache und gegebenenfalls das Dreißigfache Breite des Durchtrittsschlitzes.

Zweckmäßig ist, wenn die Kammer mindestens eine der ersten Kammerwand gegenüberliegende zweite Kammerwand mit einem zweiten Durchtrittsschlitz für die Fliese aufweist, an dem wenigstens ein zweites Dichtungselement angeordnet ist, das durch das Einbringen der Fliesen in den zweiten Durchtrittsschlitz aus einer Schließstellung in eine Offenstellung auslenkbar ist. Die Fliese kann dann durch den ersten Durchtrittsschlitz hindurch in die Innenhöhlung der Kammer eingebracht und danach mit einem abzutrennenden Fliesenabschnüt durch den zweiten Durchtrittsschlüz hindurch geschoben. Nach dem Abtrennen dieses Fliesenabschnitts kann dieser durch den zweiten Durchtrittsschlitz und die restliche Fliese durch den ersten Durchtrittsschlitz hindurch aus der Innenhöhlung entnommen werden. Der zusätzliche zweite Durchtrittsschlitz ermöglicht außerdem ein besseres Positionieren der Fliese in der Innenhöhlung.

Vorteilhaft ist, wenn die Kammer eine die Innenhöhlung nach unten hin begrenzende Bodenplatte aufweist, und wenn der erste Durchtrittsschlitz und/oder der zweite Durchtrittsschlitz parallel zu der Bodenplatte verläuft und vorzugsweise an diese angrenzt. Die Fliese kann dann während dem Hindurchschieben durch den ersten und/oder zweiten Durchtrittsschlitz auf der Bodenplatte bzw. dem Kammerboden aufliegen.

Der erste Durchtrittsschlitz ist bevorzugt zwischen der Durchtrittsöffnung und der Bodenplatte angeordnet. Die Vorrichtung ist dann noch besser und schneller handhabbar.

Die erfindungsgemäße Vorrichtung kann vorteilhaft bei Renovierungsarbeiten, bei denen Fliesen geschnitten, gebohrt und/oder geschliffen werden, in mit Einrichtungsgegenständen ausgestatteten Wohnungen oder Wohnräumen verwendet werden.

Nachfolgend sind Ausführungsbeispiele der Erfindung anhand der Zeichnungen näher erläutert. Es zeigt:
- Fig. 1: eine Vorderansicht eines ersten Ausführungsbeispiels einer Vorrichtung zum Auffangen von Zerspanungsabfällen, die eine Kammer zur Aufnahme einer Handwerkzeugmaschine und eines Werkstücks aufweist,
- Fig. 2: eine Rückseitenansicht der in Fig. 1 gezeigten Vorrichtung,
- Fig. 3: eine Vorderansicht eines zweiten Ausführungsbeispiels der erfindungsgemäßen Vorrichtung, und
- Fig. 4: einen Teilquerschnitt durch eine Wandung der Kammer.

Eine Vorrichtung zum Auffangen von Zerspanungsabfällen an einer handgeführten Handwerkzeugmaschine, wie zum Beispiel eines Winkelschleifers, einer Fräsmaschine oder einer Bohrmaschine, weist eine tragbare Kammer 1 auf, die eine Innenhöhlung 2 hat. Die Innenhöhlung 2 ist derart dimensioniert, dass sie die Handwerkzeugmaschine und ein damit zu bearbeitendes Werkstück, wie zum Beispiel eine Wand- oder Bodenftiese, aufnehmen kann.

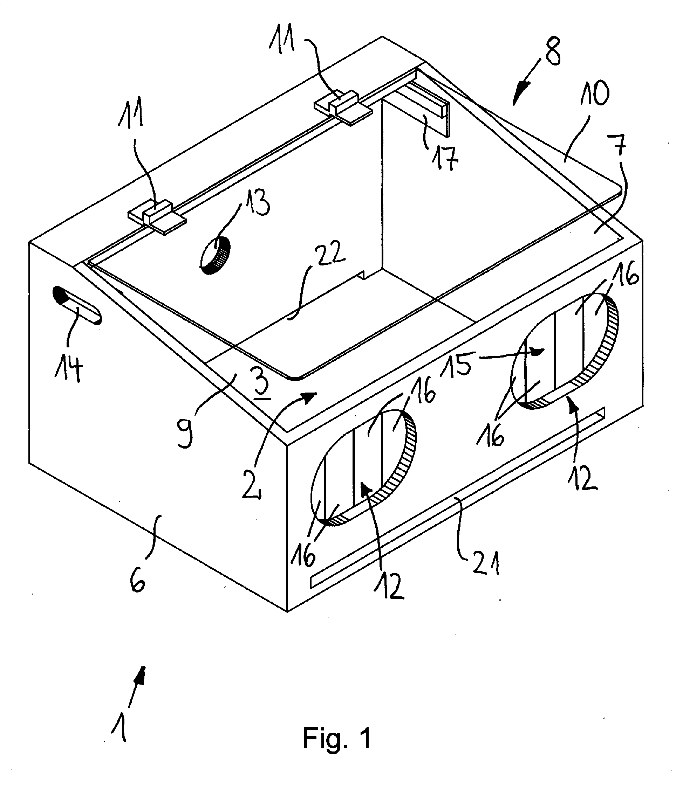

Wie in Fig. 1 erkennbar ist, ist die Kammer 1 im Wesentlichen kastenförmig mit einer Bodenplatte 3, einer Vorderwand 4, einer Rückwand 5, einer linken Seitenwand 6, einer rechten Seitenwand 7 und einer oberen Kammerwand 8 ausgestaltet. Die obere Kammerwand 8 weist eine Klammeröffnung 9 auf, an der eine Klappe 10 angeordnet ist, die mit Hilfe vom Schwenklagern 11 um eine etwa parallel zur Bodenplatte 3 verlaufende, gedachte Schwenkachse zwischen einer Schließstellung und einer Offenstellung relativ zu den daran angrenzenden Begrenzungswänden der Innenhöhlung 2 verschwenkbar ist. In ihrer Schließstellung liegt die Klappe 10 im Wesentlichen staubdicht an dem Kammeröffnung 9 umgrenzenden Randbereich der Kammer 1 an. Dabei ist die Klappe 10 derart schräg zur Bodenplatte 3 angeordnet, dass der Abstand zwischen der Klappe 10 und der Bodenplatte 3 von der Vorderwand 4 zur Rückwand 5 hin zunimmt.

In ihrer Offenstellung ist die Ebene, in der sich die Klappe 10 erstreckt, quer zu der von der Kammeröffnung 9 aufgespannten Ebene angeordnet ist, so dass die Innenhöhlung 2 durch die Kammeröffnung 9 hindurch zugänglich ist. Die Abmessungen der Kammeröffnung 9 sind so dimensioniert, dass die Handwerkzeugmaschine und das Werkstück durch die Kammeröffnung 9 hindurch in die Innenhöhlung 2 eingebracht bzw. aus dieser entnommen werden können.

Die Klappe 10 besteht aus einem durchsichtigen und antistatischen Werkstoff; wie zum Beispiel aus Acrylglas oder Polycarbonat, so dass die Innenhöhlung 2 durch die in Schließstellung befindliche Klappe 9 hindurch beobachtet werden kann.

Die Vorderwand 4 weist zwei Durchtrittsöffnungen 12 auf, die etwa in gleicher Höhe über der Bodenplatte 3 angeordnet und seitlich voneinander beabstandet sind. Die Öffnungsquerschitte der Durchtrittsöffnungen 12 sind derart dimensioniert, dass der Benutzer der Vorrichtung jeweils mit einem Arm durch die betreffende Durchtrittsöffnung 12 hindurch in die Innenhöhlung 2 eingreifen kann, um die darin befindliche Handwerkzeugmaschine und/oder das darin befindliche Werkstück zu halten und/oder relativ zueinander zu positionieren. Bei dem in Fig. 1 gezeigten Ausführungsbeispiel sind die Durchtrittsöffnungen 12 jeweils oval ausgestaltet. Dabei weisen die Durchtrittsöffnungen 12 in der Erstreckungsebene der Vorderwand parallel zur Bodenplatte 3 eine größere Abmessung auf als in einer Richtung, die normal zur Bodenplatte 3 angeordnet ist.

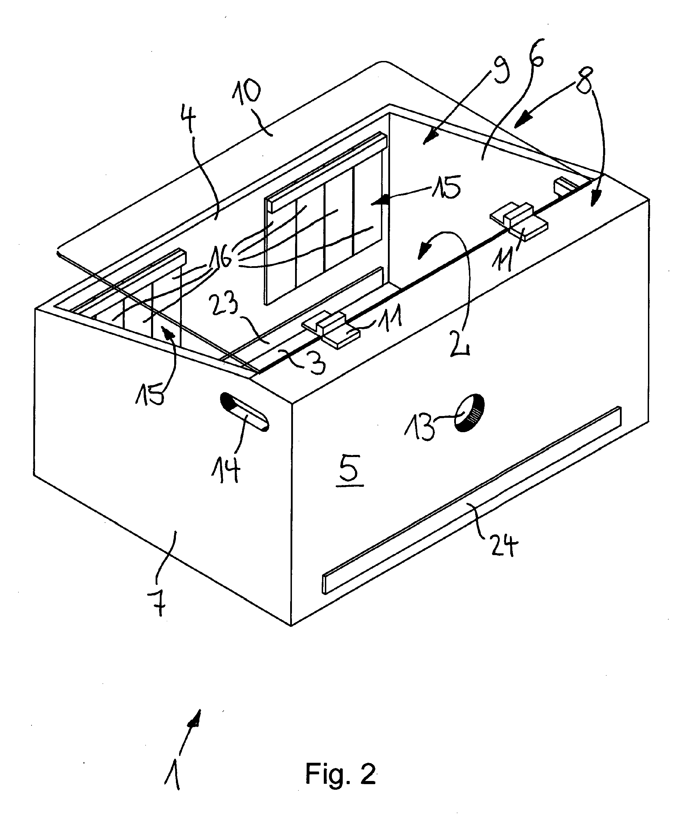

In Fig. 2 ist erkennbar, dass die Rückwand 5 eine Absaugöffnung 13 aufweist, die mit einer in der Zeichnung nicht näher dargestellten, an sich bekannten Absaugeinrichtung, wie zum Beispiel einem Staubsauger verbindbar ist. Mit Hilfe der Absaugeinrichtung kann während des Bearbeitens des Werkstücks mit der Handwerkzeugmaschine auftretender Staub aus der Innenhöhlung 2 abgesaugt werden. Während des Absaugens der in der Innenhöhlung 2 befindlichen Luft strömt Frischluft aus der Umgebung der Kammer 1 durch die Durchtrittsöffnungen 12 und/oder in den Seitenwänden vorgesehene, schlitzförmige Durchbrüche 14 hindurch in die Kammer. Die Absaugeinrichtung weist bevorzugt einen Staubbeutel oder einen Staubbehälter zum Sammeln des in der abgesaugten Luft enthaltenen Staubs auf Es ist aber auch denkbar, dass die abgesaugte Luft in größerer Entfernung von der Absaugöffnung 1 3 ungefiltert ins Freie geleitet wird.

Bei dem in Fig. 1 und 2 gezeigten Ausführungsbeispiel ist die Absaugöffnung 1 3 durch einen Durchbruch in der Rückwand 5 der Kammer 1 gebildet, in den ein dazu passender Schlauch oder ein dazu passendes Rohr einsetzbar ist. Es sind aber auch andere Ausgestaltungen denkbar, bei denen die Absaugöffnung 13 3 an einem an der Außenseite der Rückwand 5 vorstehenden, mit der Innenhöhlung 2 verbundenen Rohrstutzen angeordnet ist. Dabei ist es sogar möglich, dass der Rohrstutzen konisch oder gestuft ausgestaltet ist, damit Absaugschläuche oder Absaugrohre mit unterschiedlichen Querschnitten mit dem Rohrstutzen lösbar verbindbar sind.

An den Durchtrittsöffnungen 12 ist innenseitig jeweils eine elastische Dichtung 15 angeordnet, die derart ausgestaltet ist, das sie am Arm des Benutzers zur Anlage kommt, wenn der Benutzer durch die Durchtrittsöffnung 12 hindurch mit dem Arm in die Innenhöhlung 2 eingreift. Die Dichtung 15 weist jeweils mehrere, die Durchtrittsöffnung bereichsweise überdeckende flöchige Dichtungsabschnitte 16 auf, die seitlich aneinander angrenzen. In Fig. 2 ist erkennbar, dass die Dichtungsabschnitte 16 als in vertikaler Richtung verlaufende Dichtungsstreifen ausgestaltet sind, die an ihrem oberen Ende an einer Befestigungsstelle an der Vorderwand 4 befestigt sind. In einer Ruhelage sind die Dichtungsabschnitte 16 derart parallel zur Vorderwand 4 angeordnet, dass sie flächig an dem die Durchtrittsöffnung 12 umgrenzenden Randbereich der Vorderwand 4 anliegen. Wenn der Benutzer mit der Hand in die Durchtrittsöffnung 12 eingreift, wird ein unterhalb der Befestigungsstelle befindlicher Abschnitt der Dichtungsabschnitte 16 aus der Ruhelage in die Innenhöhlung 2 der Kammer ausgelenkt.

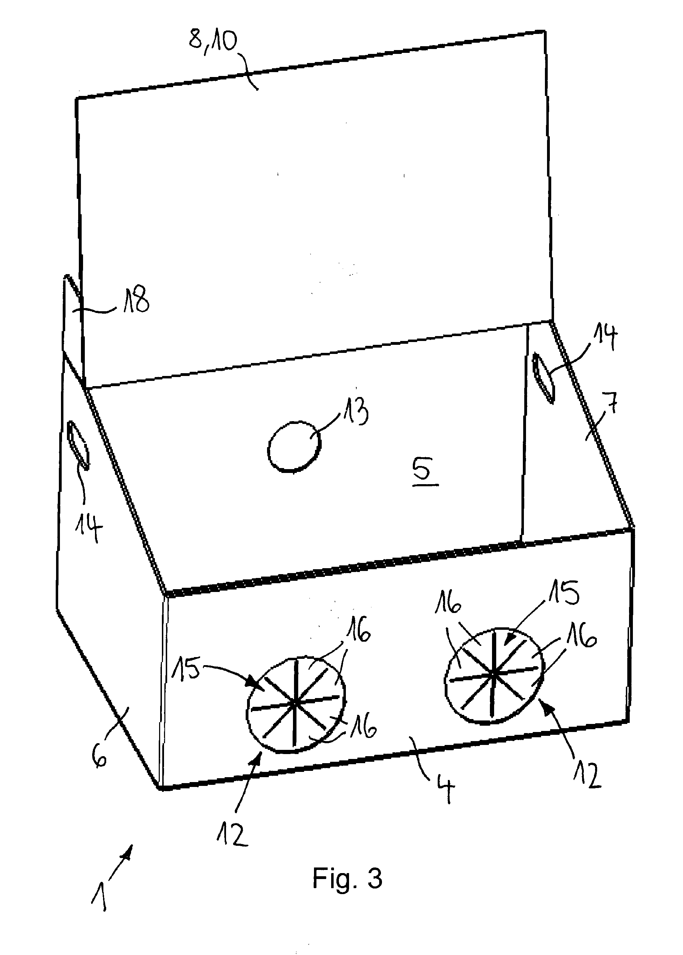

In Fig. 3 ist erkennbar, dass die Dichtungsabschnitte 16 auch radial zum Zentrum der Durchtrittsöffnung 12 angeordnet sein können. In Fig. 3 ist außerdem erkennbar, dass über der oberen Kammerwand 8 mindestens ein Anschlagelement 18 angeordnet sein kann, gegen welches die Klappe 10 in Offenstellung derart positioniert werden kann, dass sie quer zur Bodenplatte angeordnet ist und durch die Schwerkraft in Offenstellung gehalten wird.

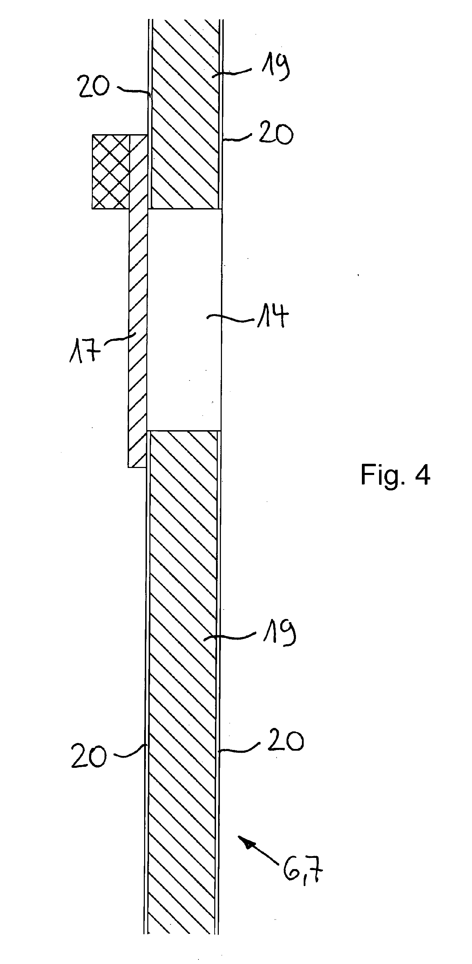

Die in den Seitenwänden 6, 7 angeordneten Durchbrüche 14 dienen als Tragegriffe für die Kammer 1. Die Durchbrüche 14 sind als Schlitze ausgestaltet, die etwa parallel zur Bodenplatte 3 verlaufen. Die Durchbrüche 14 sind jeweils an ihrer der Innenhöhlung 2 zugewandten Innenseite mittels einer Dichtungsscheibe 17 abgedichtet. Wie in Fig. 4 erkennbar ist, sind die Dichtungsscheiben 17 an ihrem oberen Randbereich fest mit der betreffenden Seitenwand 6, 7 der Kammer 1 verbunden. In einer Ruhelage sind die Dichtungsscheiben 17 derart parallel zur Seitenwand 6, 7 angeordnet, dass sie flächig an dem den betreffenden Durchbruch 14 umgrenzenden Randbereich der Seitenwand 6, 7 anliegen. Wenn der Benutzer mit den Fingern in den Durchbruch 14 durchgreift, wird der untere Rand der betreffenden Dichtungsscheibe 1 7 elastisch aus der Ruhelage ausgelenkt und von der betreffenden Seitenwand 6, 7 abgehoben. Die Dichtungsscheiben 17 können auch durch einen beim Absaugen von Luft aus der Innenhöhlung in dieser auftretenden Unterdruck aus der Ruhelage ausgelenkt werden. Dabei strömt Frischluft aus der Umgebung der Kammer 1 durch die Durchbrüche 14 hindurch in die Innenhöhlung.

In Fig. 4 ist noch erkennbar, dass die Wandungen der Kammer 1 als Sandwich-Platten gebildet sind, die einen Plattenkern 19 aus einem ersten Werkstoff aufweisen, der beidseitig mit einer Schicht 20 aus einem zweiten Werkstoff beschichtet ist, der eine höhere Zugfestigkeit aufweist als der Plattenkarn 19. Der ersten Werkstoff hat eine geringere Dichte als der zweite Werkstoff

In Fig. 1 und 2 ist erkennbar, dass die Vorderwand 4 einen ersten geraden Durchtrittsschlitz 21 und die Rückwand einen zweiten geraden Durchtrütsschlitz 22 für eine Fliese aufweist. An jedem dieser Durchtrittsschlitze 21, 22 ist jeweils ein Dichtungselement 23, 24, wie zum Beispiel eine Gummilippe und/oder eine Bürste angeordnet ist, das durch das Einbringen der Fliese in den Durchtrittsschlitz 21, 22 aus einer Schließstellung, in der es den betreffenden Durchtrittsschlitz 21, 22 überdeckt, in eine Offenstellung auslenkbar ist, in der es den Durchtrittsschlitz 21, 22 zumindest bereichsweise freigibt.

Der erste Durchtrittsschlitz 21 verläuft zwischen den Durchtrittsöffnungen 12 und der Bodenplatte 3 und erstreckt sich unterbrechungsfrei über die Durchtrittsöfnungen 12 und den zwischen diesen befindlichen Wandungsbereich der Vorderwand 4. Der zweite Durchtrittsschlitz 21 ist parallel zum ersten Durchtrittsschlitz 21 an der Rückwand 5 angeordnet. Deutlich ist erkennbar, dass die Durchtrittsschlitze 21, 22 mit ihrem unteren Längsrand an die Bodenplatte 3 angrenzen bzw. dass der untere Längsrand der Durchtrittsschlitze 21, 22 durch die Bodenplatte 3 gebildet ist.

## Patentansprüche

1. Vorrichtung zum Auffangen von Zerspanungsabfällen an Handwerkzeugmaschinen, mit einer tragbaren Kammer (1), wie eine Innenhöhlung (2) aufweist, die derart dimensioniert ist, dass sie die Handwerkzeugmaschine und ein damit zu bearbeitenden Werkstück aufnehmen kann, wobei die Kammer (1) folgendes aufweist:
- eine verschließbare Kammeröffnung (9), durch welche die Handwerkzeugmaschine in die Innenhöhlung (2) einbringbar und aus dieser entnehmbar ist,
- mindestens eine durchsichtige Kammerwand, durch welche die Innenhöhlung (2) beobachtbar ist,
- mindestens eine an den Querschnitt eines menschlichen Arms angepasste Durchtrittsöffnung (12), durch die der Benutzer mit der Hand und/oder dem Arm in die Innenhöhlung (2) der Kammer (1) eingreifen kann,
- mindestens eine mit der Innenhöhlung (2) verbundene Absaugöffnung (1 3), an der eine Staubabsaugeinrichtung angeschlossen oder anschließbar ist.

2. Vorrichtung nach Anspruch 1, **dadurch gekennzeichnet, dass** die durchsichtige Kammerwand an der Oberseite der Kammer (1) angeordnet und vorzugsweise als Klappe (10) ausgestaltet ist, die mit einem die Kammeröffnung (9) umgrenzenden Randbereich der Kammer (1) zwischen einer Offen- und einer Schließstellung verschwenkbar verbunden ist.

3. Vorrichtung nach Anspruch 1 oder 2, **dadurch gekennzeichnet, dass** an der Durchtrittsöffnung (12) eine elastische Dichtung (15) angeordnet ist, die derart ausgestaltet ist, das sie am Arm des Benutzers zur Anlage kommt, wenn der Benutzer durch die Durchtrittsöffnung (12) hindurch mit dem Arm in die Innenhöhlung (2) eingreift.

4. Vorrichtung nach Anspruch 3, **dadurch gekennzeichnet, dass** die Dichtung (15) mehrere, in der Durchtrütsöffnung (12) angeordnete und/oder diese bereichsweise überdeckende flächige Dichtungsabschnitte (16) aufweist, die quer zu einer Normalen auf die von der der Durchtrittsöffnung (12) aufgespannte Ebene zueinander versetzt sind und in Richtung der Normalen aus einer Ruhelage auslenkbar sind.

5. Vorrichtung nach einem der Ansprüche 1 bis 4, **dadurch gekennzeichnet, dass** sie mindestens einen Tragegriff aufweist.

6. Vorrichtung nach Anspruch 5, **dadurch gekennzeichnet, dass** der Tragegriff durch einen schlitzförmigen Durchbruch (14) in einer Wandung der Kammer (1) gebildet ist, und dass der Durchbruch (14) mittels einer Dichtungsscheibe (17) abgedichtet ist, die quer zu der von dem Durchbruch (14) aufgespannten Ebene aus einer Ruhelage in die Innenhöhlung (2) auslenkbar ist.

7. Vorrichtung nach einem der Ansprüche 1 bis 6, **dadurch gekennzeichnet, dass** die Kammer (1) Wandungen aufweist, die durch Sandwich-Platten gebildet sind.

8. Vorrichtung nach einem der Ansprüche 1 bis 7, **dadurch gekennzeichnet, dass** sie ein am Erdboden aufstellbares Traggestell aufweist, auf dem die Kammer (1) derart angeordnet ist, dass das Zentrum der mindestens einen Durchtrittsöffnung (12) in einer Arbeitshöhe von 80 bis 120 cm, bevorzugt von 90 bis 100 cm über dem Erdboden angeordnet ist.

9. Vorrichtung nach einem der Ansprüche 1 bis 8, **dadurch gekennzeichnet, dass** die Kammer (1) mindestens eine erste Kammerwand mit einem ersten Durchtrittsschlitz (21) für eine Fliese aufweist, an dem wenigstens ein erstes Dichtungselement (23) angeordnet ist, das durch das Einbringen der Fliese in den ersten Durchtrittsschlitz (21) aus einer Schließstellung, in der es den ersten Durchtrittsschlitz (21) überdeckt, in eine Offenstellung auslenkbar ist, in der es den ersten Durchtrittsschlitz (21) zumindest bereichsweise freigibt.

10. Vorrichtung nach Anspruch 9, **dadurch gekennzeichnet, dass** die Kammer (1) mindestens eine der ersten Kammerwand gegenüberliegende zweite Kammerwand mit einem zweiten Durchtrittsschlitz (22) für die Fliese aufweist, an dem wenigstens ein zweites Dichtungselement (24) angeordnet ist, das durch das Einbringen der Fliese in den zweiten Durchtrittsschlitz (22) aus einer Schließstellung in eine Offenstellung auslenkbar ist.

11. Vorrichtung nach Anspruch 9 oder 10, **dadurch gekennzeichnet, dass** die Kammer (1) eine die Innenhöhlung (2) nach unten hin begrenzende Bodenplatte (3) aufweist, und dass der erste Durchtrittsschlitz (21) und/oder der zweite Durchtrittsschlitz (22) parallel zu der Bodenplatte (3) verläuft und vorzugsweise an diese angrenzt.

12. Vorrichtung nach Anspruch 11, **dadurch gekennzeichnet, dass** der erste Durchtrittsschlitz (21) zwischen der Durchtrittsöffnung (12) und der Bodenplatte (3) angeordnet ist.

13. Verwendung einer Vorrichtung nach einem der Ansprüche 1 bis 12 in mit Einrichtungsgegenständen ausgestatteten Wohnungen oder Wohnräumen.
